# EUROPEAN PATENT APPLICATION

(11) **EP 1 576 885 A2**
(43) Date of publication of application: **21.09.2005**
(21) Application number: 05075620.4
(22) Date of filing: 15.03.2005
(51) Int. Cl.: A23C 19/032, A23C 19/06, A23C 19/068, A23C 19/14

(54) **Method for the preparation of goat cheese and goat cheese obtained thereby**

(30) Priority: 17.03.2004 NL 1025753
(71) Applicant: Campina Nederland Holding B.V., 5301 LB Zaltbommel (NL)
(72) Inventor: Burghout, Herman Frank, 5241 XT Rosmalen (NL); Penders, Johannes Antonius, 5324 AV Ammerzoden (NL)
(74) Representative: Bot, David Simon Maria

(57) **Abstract**

The invention relates to a method for making goat cheese of the semi-hard type in which goat cheese milk is mixed with a usual starter containing mesophilic bacteria and is coagulated to obtain a curd/whey mixture, the curd is cut, whey is separated off, the curd is brought to a suitable scalding temperature with washing water and is scalded, the washing water is removed and the curd is put into a desired mould and pressed, after which the moulded goat cheese is brined and left to ripen, which is characterized in that an additional starter containing thermophilic bacteria is used to improve the flavour and the scalding temperature and ripening temperature are increased relative to the usual scalding and ripening temperature. In an attractive embodiment use is made of goat milk which is pasteurized at higher than usual temperature.

Cheese obtainable with the method is also described.

## Description

The invention relates in the first place to a method for the preparation of goat cheese of the semi-hard type (Gouda) in which goat cheese milk is mixed with a usual starter containing mesophilic bacteria and is coagulated to obtain a curd/whey mixture, the curd is cut, whey is separated off, the curd is brought to a suitable scalding temperature with washing water and is scalded, the washing water is removed and the curd is put into a desired mould and pressed, after which the moulded goat cheese is brined and left to ripen.

Such a method is generally known.

Thus EP 1133921 describes a goat cheese of the Maasdam type. This young cheese (the cheese is sold at an age of 6 weeks) is characterized by large eyes, with the use of a propionic acid culture playing a major role.

In Lait, 1992, 72, 5, 437-448, Requena describes a method in which a mesophilic starter combination consisting of L. lactis (80%), L. mesenteroides (5%), Leuconostoc paramesenteroides (5%) and Lb. casei (10%) is used, the cheese milk is pasteurized at 60 degrees Celsius for 30 minutes and the cheese is ripened for 2 months at a temperature of 10-12 degrees Celsius.

FR 2635950 describes a goat cheese for cooking purposes in which the main feature is the usual lactic acid coagulation with low coagulation temperatures and longer coagulation times. This differs from the present invention in that the heat treatment of this young cheese is of a different nature from that of the old goat cheese of the Gouda type according to the invention which involves more rennet and shorter coagulation times.

In Lait, 1998, 78, 557-568, Kandarakis et al. describes a hard ewe/goat cheese of the Gruyère type with limited propionic acid fermentation.

The method used according to the invention shows similarity with the method for the preparation of Gouda cheese.

Ripening of the cheese takes place at 13°C to an age of 8-10 weeks; the cheese then has a mild goat cheese flavour which is highly appreciated by the consumer. If the cheese is allowed to ripen longer, however, a typical sharp and stronger goat cheese flavour develops which is usually found to be less agreeable. In addition to these disadvantageous flavour properties, a highly crumbly texture is obtained which is judged by the consumer as less desirable when the cheese is cut.

The present invention has the object firstly of providing a method which makes it possible to make goat cheese that keeps an agreeable and mild goat cheese flavour even with longer ripening. Another object of the invention is to provide a method in which, in addition to an improved flavour with longer ripening, the typical short structure of younger goat cheese is maintained while malleability is nevertheless obtained and the crumbly character is largely missing.

The first object stated above is achieved with a method of the stated type which is characterized in that an additional starter containing thermophilic bacteria is used to improve the flavour while the scalding temperature and ripening temperature are increased relative to the usual scalding and ripening temperature.

This is because it has been found that the presence of a starter containing thermophilic bacteria, when increased scalding and ripening temperatures are used, makes the sharp and typical goat cheese flavour disappear and after a ripening time of 15 weeks or more, for example, an agreeable flavour is obtained which can best be characterized as "not goaty" and sweet, with furthermore the typical whitish colour and short structure of goat cheese being retained.

The additional starter containing thermophilic bacteria expediently contains at least one strain chosen from *Streptococcus thermophilus, Lactobacillus helveticus, Lactobacillus acidophilus* and *Lactobacillus bulgaricus.*

Such strains are generally known and are usually used to make accelerated ripening possible in cheese. The fact that such strains also exhibit an effect of maintaining flavour and/or improving it when they are used in the making of goat cheese was surprising and unexpected.

In an attractive embodiment the starter containing thermophilic bacteria is a mixed culture of *Streptococcus thermophilus, Lactobacillus helveticus* and *Lactobacillus* *acidophilus* which is used in a quantity of 250-750 g/100 kg of cheese milk.

In another attractive embodiment the additional starter containing thermophilic bacteria is a monoculture of *Lactobacillus helveticus* which is used in a quantity of 50-100 g/100 kg of cheese milk.

The additional starter containing thermophilic bacteria preferably includes both a mixed culture of *Streptococcus thermophilus, Lactobacillus helveticus* and *Lactobacillus acidophilus* and a monoculture of *Lactobacillus helveticus,* with the mixed culture of *Streptococcus thermophilus, Lactobacillus helveticus* and *Lactobacillus acidophilus* being used in a quantity of approximately 500 g/100 kg of cheese milk and the monoculture of *Lactobacillus helveticus* being used in a quantity of approximately 70 g/100 kg of cheese milk.

The mixed culture and monoculture described above are commercially available; the mixed culture is available as APS13 (NIZOSTAR APS) from CSK Food Enrichment in Leeuwarden (NL), while LHB-01 from Chr. Hansen (DK) and LB-40 from Campina Holland Cheese, Tilburg (NL) can be mentioned as examples of the commercially available monoculture.

The starter containing thermophilic bacteria is used in addition to a usual starter containing mesophilic bacteria which is used in the making of goat cheese. A starter containing lactic acid bacteria which can be used in the present invention is for example Bos (CSK Food Enrichment in Leeuwarden, NL).

A Bos starter contains *Lactococcus lactis* subsp. *lactis* and *Lactococcus lactis* subsp. *cremoris* as acid-producing bacteria and the citrate-using strains *Lactococcus lactis* subsp. *lactis* biovar. *diacetylactis* and *Leuconostoc mesenteroides* subsp. *cremoris.* A quantity of Bos used in the present invention is for example between 0.30 and 0.60% relative to the quantity of goat cheese milk; in particular the quantity of Bos is approximately 0.4% relative to the quantity by weight of cheese milk (vol/wt percentages).

The rennet which can be used in the present invention is suitably a usual calf rennet such as Kalase (CSK Food Enrichment, Leeuwarden, NL) for example: the rennet is used in a quantity of 12-15 ml/100 kg of cheese milk, in particular 14 ml/100 kg of cheese milk.

It has been found that microbial rennet (for example Milase from CSK; Fromase XT from CSK and others) can also be successfully used in comparable quantities instead of calf rennet in the present application. Even with a longer ripening time the effect of the presence of a starter containing an additional quantity of thermophilic bacteria is retained; this means that the sharp and stronger goat cheese flavour is absent.

In the presence of an additional starter containing thermophilic bacteria as in the present invention it is possible to use higher scalding and ripening temperatures than is usual in the making of goat cheese. Scalding temperatures up to a maximum of 37°C can expediently be used; the scalding temperature is preferably about 36°C, while the scalding is carried out for a period of 30-40 min.

The ripening can also be carried out at a higher temperature (17-19°C) than is usual for the ripening of goat cheese (approximately 13°C); the ripening temperature is expediently about 19°C.

The ripening time is not restricted and can for example be 6 to 30 weeks, in particular 10 to 24 weeks.

The high scalding temperature described above reduces the quantity of bound moisture in the curd, so that a cheese which is too dry might be produced. The applicant has engaged in research into the binding of moisture in the initial phase of goat cheesemaking and in particular the increasing of the quantity of bound moisture in the stage prior to the scalding phase.

Unexpectedly it has now been found that in the method described above for making goat cheese of the semi-hard type a greater quantity of bound moisture can be created if in accordance with the invention goat milk is used which has been pasteurized using a pasteurization temperature up to about 90°C (the normal pasteurization temperature is 72-74°C). Where cow milk, when subjected to such a high temperature, can no longer be coagulated, or coagulated only to a limited extent, it has been found that goat milk can readily tolerate pasteurization temperatures up to 90°C and good coagulation is obtained. In the pasteurization of goat milk at such a high temperature a relatively large amount of moisture is bound to the protein; the higher scalding temperature later in the method does not then lead to a cheese which is too dry.

A further consequence of the use of a high pasteurization temperature was surprisingly that in this way the other object of the invention stated earlier was achieved, namely the provision of a method in which, in spite of the use of a long ripening time, a goat cheese with the typical short structure of young goat cheese with a malleable and non-crumbly character is obtained with the agreeable and mild goat cheese flavour that is associated with the use of an additional starter containing thermophilic bacteria.

This is because it was found that the coagulation time of the goat milk, as a result of the high pasteurization temperature, was lengthened by about one tenth to about 25 min. Together with this, however, more protein and more fat was incorporated into the cheese than is usual when normal pasteurization temperatures are used. Without wanting to be tied to any theory, the applicant assumes that the structural improvement mentioned above is connected with the changed protein and fat incorporation into the cheese. With regard to the improved incorporation of fat it is possible to use non-skimmed milk in the method for making goat cheese, so that a goat cheese is obtained with a fat content of 50-54%, relative to the weight of the dry matter.

It is of particular importance that the product improvements discussed earlier, of better flavour (agreeable and mild with a long ripening time through additional starter containing thermophilic bacteria in combination with an increased scalding and ripening temperature) and better texture (retention of short structure and malleability and less crumbly through use of high pasteurization temperature), are accompanied by an increased incorporation of protein and fat. Because of the relatively small scale of production of goat cheese, both the utilisation of the whey and that of any cream left over present problems. From this point of view it is very attractive that as much as possible of the expensive goat milk protein and the goat milk fat, which is difficult to sell separately, goes into the cheese.

These highly desirable aspects are achieved in the preferred method described above, in which the use of an additional starter containing thermophilic bacteria, higher scalding and ripening temperatures, and use of a higher pasteurization temperature of the goat milk, are combined.

In particular, pasteurized goat milk where the pasteurization is carried out at a temperature of 85-90°C for 5-60 sec is used in making the goat cheese. Goat milk where the pasteurization is carried out at a temperature of 90°C for 15 sec is preferably used.

From the preceding discussion it is apparent that a high pasteurization temperature for goat milk has a favourable effect on the bound moisture content, so that the high scalding temperature used does not lead to a cheese which is too dry; other contents, such as the protein transfer percentage and the fat transfer percentage, are also increased by using the high pasteurization temperature in combination with an increased scalding temperature. Transfer percentage means the percentage of fat or protein that has ended up in the cheese, relative to the total quantity of protein present in the primary materials. An increase in cheese yield of about 10% is achieved as a result of the increased incorporation of milk protein and milk fat.

The previously explained high pasteurization temperature of the goat milk, which is of great advantage in the present invention, is also applicable if the goat cheese is made in the conventional way, i.e. in the absence of the additional quantity of starter containing thermophilic bacteria. The higher pasteurization temperature will then have a favourable effect on the quantity of bound moisture and also on the protein and fat transfer percentages.

The invention therefore also relates to a method for making goat cheese in which pasteurized goat cheese milk is mixed with a usual starter containing mesophilic bacteria and is coagulated to obtain a curd/whey mixture, the curd is cut, whey is separated off, the curd is brought to a suitable scalding temperature with washing water and is scalded, the washing water is removed and the curd is put into a desired mould and pressed, after which the moulded goat cheese is brined and left to ripen, which is characterized in that goat milk is used which is pasteurized using a pasteurization temperature up to about 90°C.

In particular, goat milk is used where the pasteurization is carried out at a temperature of 85-90°C for 5-60 sec.

Advantageously, goat milk is used where the pasteurization is carried out at a temperature of 90°C for 15 sec.

The invention also relates to goat cheese obtainable using the method as described above, where use is made of a starter containing an additional quantity of thermophilic bacteria. Such a goat cheese is characterized in that at least one or more of the contents of 2-methylpropanal, 3-methylbutanal, 2-methylbutanal, 3-ethyl-2,5-dimethylpyrazine, 2,3,5-trimethyl-6-ethylpyrazine, 2,6-dimethylpyrazine, trimethylpyrazine, pyrazine and methylpyrazine are increased relative to the contents of these substances in goat cheese made in the usual way.

Especially the pyrazines are of importance here; they are largely volatile compounds which among other things give a bouillon flavour and odour.

The invention will now be explained with the aid of the following examples, which are not to be construed as limiting.

### Experiment

Some trials were carried out in which the effect of the presence of an additional starter containing thermophilic bacteria on the flavour was investigated

The general production conditions were as follows:

The goat cheese milk was pasteurized at 73°C for 23 seconds. The additions and conditions for the production of the reference cheese (Arina ®; Campina) were as follows:

| | |
|---|---|
| BOS (wt % relative to weight of milk) | 0.40 |
| CaCl2 (ml 30 wt% per 100 kg milk) | 90 |
| Rennet (Kalase; CSK) (ml/100 kg milk) | 14 |
| Coagulation temperature (°C) | 31.5 |
| Coagulation time (min.) | 23 |
| Scalding temperature (°C) | 33.7 |
| Brining time (hours) | 42 |
| Ripening temperature (°C) | 13 |

The test cheese was made in accordance with the above recipe, but one or more additional starters were used. These additional starters were made up as follows:

| | |
|---|---|
| LHB-01 (g/100 kg milk) | 71.4 |
| APS13 (g/100 kg milk) | 500 |

A series of experiments was then carried out in which the cheeses obtained were assessed for a number of aspects: The assessments were made on a scale from 1 to 5 inclusive, with the following ratings being employed:

| 1 | 2 | 3 | 4 | 5 |
|---|---|---|---|---|
| present to very weak | weak | normal | strong | very strong |

The aspects assessed relate to "goat" character; sweetness; pungency; bitterness.

In addition, the participants were asked to assess the consistency, as follows:

| 1 | | 3 | | 5 |
|---|---|---|---|---|
| very soft | | normal | | very firm |

The participants were also asked to estimate the age of the cheese in weeks. Graphs which are shown in the appended figures were plotted from the replies.

### Experiment A:

Goat cheeses 1 and 2 were made in the general way described above and compared with each other, with:
1. with additional starter containing thermophilic bacteria and a higher scalding and ripening temperature (19 degrees Celsius) being indicated in the table as 742 and 750.
2. without additional starter containing thermophilic bacteria and a usual scalding and ripening temperature (13 degrees Celsius) being indicated in the table as 737 and 745.

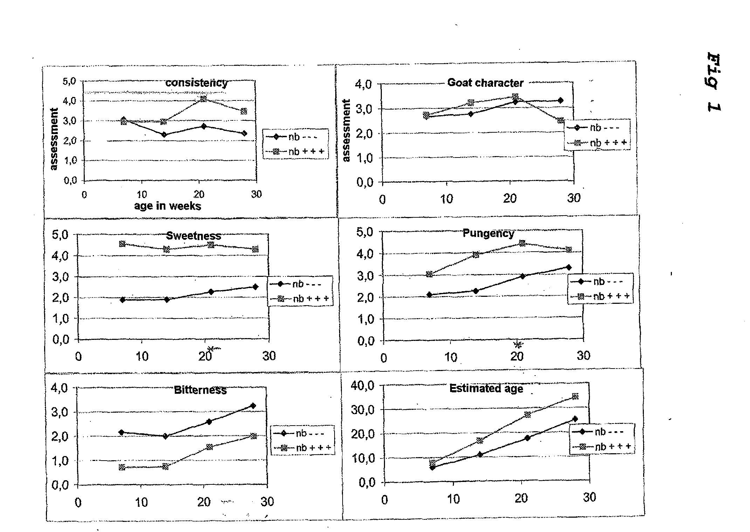

The results are given in Figure 1. The data from cheeses 1 are indicated in the graph with a square (■, =nb+++) and the data from cheeses 2 with a diamond (◆, =nb---). On this point it can be noted that the cheeses 1 scored better in the assessments for consistency, sweetness, pungency and bitterness, while the age of the cheeses 1 was estimated to be higher. The goat character did not differ from that of cheeses 2.

### Experiment B:

Goat cheeses 3 and 4 were made in the general way described above and compared with each other, with:
3. with additional starter containing thermophilic bacteria and a higher scalding and ripening temperature (19 degrees Celsius) and a higher pasteurization temperature (90 degrees Celsius) being indicated in the table as 750.
4. without additional starter containing thermophilic bacteria and a usual scalding and ripening temperature (13 degrees Celsius) and a usual pasteurization temperature (73 degrees Celsius) being indicated in the table as 737.

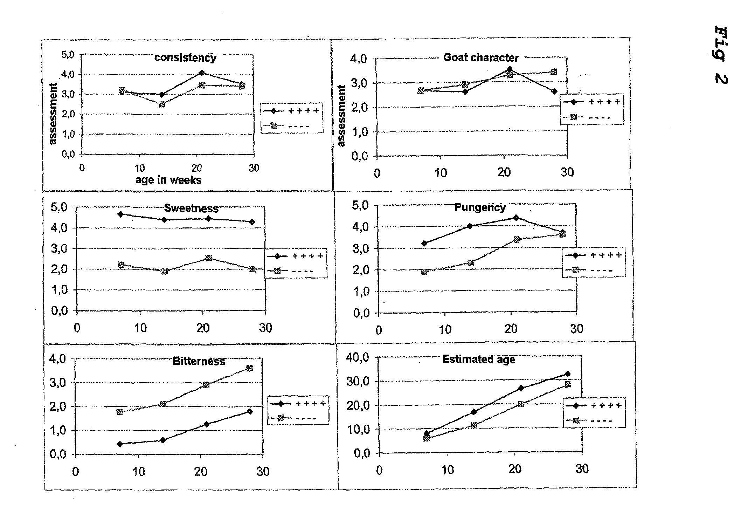

The results are given in Figure 2. The data from cheeses 3 are indicated in the graph with a square (■, =----) and the data from cheeses 4 with a diamond (◆, =++++). On this point it can be noted that the consistency of the cheeses 3 was slightly improved, especially at the age of 10-25 weeks. The goat character remained comparable up to week 20. The sweetness and the bitterness of the cheeses 3 was judged to be considerably better. The pungency, especially up to an age of about 30 weeks, was judged to be better. The age of the cheeses 3 was estimated to be higher than that of cheeses 4.

### Experiment C:

Goat cheeses 5 and 6 were made in the general way described above and compared with each other, with:
5. without additional starter containing thermophilic bacteria and a higher pasteurization temperature (90 degrees Celsius) being indicated in the table as 745.
6. without additional starter containing thermophilic bacteria and a usual pasteurization temperature (73 degrees Celsius) being indicated in the table as 737.

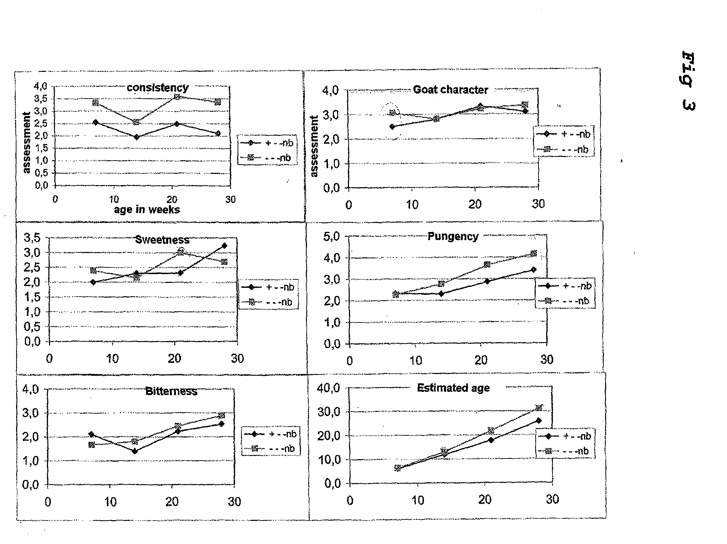

The results are given in Figure 3. The data from cheeses 5 are indicated in the graph with a square (■, =---nb) and the data from cheeses 6 with a diamond (◆, =+--nb). On this point it can be noted that cheeses 5 showed a better consistency, the goat character of cheeses 5 was comparable, especially at an age of more than 10 weeks. The sweetness of the cheeses 5 was generally comparable with that of cheeses 6. The pungency of cheeses 5 was somewhat greater, while the bitterness was comparable between cheeses 5 and 6. The age of cheeses 5 was estimated to be somewhat greater, however.

Trials were also carried out in order to investigate in greater detail the flavour differences between the test cheeses and the reference in terms of the composition of the moulded goat cheese. The absolute and relative quantities of specific flavour components were determined. It is apparent from the table that the various aldehydes and pyrazines which are important for flavour are greatly increased as a result of the action of the thermophilic starter. These analyses were performed with the aid of dynamic headspace in combination with MS fullscan.

The results are given in the following table:

| | | | | |
|---|---|---|---|---|
| Sampling after 24 weeks | 737 | 745 | 742 | 750 |
| Pasteurization temp. (°C) | 73 | 90 | 73 | 90 |
| APS | - | - | + | + |
| LHB01 | - | - | + | + |
| Ripening temp. (°C) | 13 | 13 | 19 | 19 |
| | | | | |

| **Pyrazines (µg/kg)** | | | | |
|---|---|---|---|---|
| 2-methylpropanal | 35 | 27 | 163 | 158 |
| 3-methylbutanal | 66 | 40 | 190 | 255 |
| 2-methylbutanal | 17 | 7 | 126 | 119 |
| 3-ethyl-2,5-dimethylpyrazine | <1 | <1 | 18 | 21 |
| 2,3,5-trimethyl-6-ethylpyrazine | <1 | <1 | 99 | 52 |
| | | | | |

| **Relative peak areas** | | | | |
|---|---|---|---|---|
| Pyrazine | 8 | 9 | 10 | 11 |
| Methylpyrazine | 9 | 9 | 14 | 16 |
| 2,6-dimethylpyrazine | 95 | 70 | 224 | 241 |
| Trimethylpyrazine | 54 | 29 | 553 | 403 |

## Claims

1. Method for making goat cheese of the semi-hard type in which goat cheese milk is mixed with a usual starter containing mesophilic bacteria and is coagulated to obtain a curd/whey mixture, the curd is cut, whey is separated off, the curd is brought to a suitable scalding temperature with washing water and is scalded, the washing water is removed and the curd is put into a desired mould and pressed, after which the moulded goat cheese is brined and left to ripen, **characterized in that** an additional starter containing thermophilic bacteria is used to improve the flavour and the scalding temperature and ripening temperature are increased relative to the usual scalding and ripening temperature.

2. Method according to claim 1, **characterized in that** the additional starter containing thermophilic bacteria contains at least one strain chosen from *Streptococcus thermophilus, Lactobacillus helveticus, Lactobacillus acidophilus* and *Lactobacillus bulgaricus.*

3. Method according to claims 1-2, **characterized in that** the additional starter containing thermophilic bacteria is a mixed culture of *Streptococcus thermophilus, Lactobacillus helveticus* and *Lactobacillus acidophilus* and is used in a quantity of 250-750 g/100 kg of cheese milk.

4. Method according to claims 1-2, **characterized in that** the additional starter containing thermophilic bacteria is a monoculture of *Lactobacillus helveticus* in a quantity of 50-100 g/100 kg of cheese milk.

5. Method according to one or more of claims 2-4, **characterized in that** the additional starter containing thermophilic bacteria includes both a mixed culture of *Streptococcus thermophilus, Lactobacillus helveticus* and *Lactobacillus acidophilus* and a monoculture of *Lactobacillus helveticus.*

6. Method according to claim 5, **characterized in that** the mixed culture of *Streptococcus thermophilus, Lactobacillus helveticus* and *Lactobacillus acidophilus* is used in a quantity of approximately 500 g/100 kg of cheese milk and the monoculture of *Lactobacillus helveticus* is used in a quantity of approximately 70 g/100 kg of cheese milk.

7. Method according to one or more of the preceding claims 1-6, **characterized in that** the scalding temperature is up to a maximum of 37°C.

8. Method according to claim 7, **characterized in that** the scalding temperature is about 36°C and the scalding is carried out for a period of 30-40 min.

9. Method according to one or more of claims 1-8, **characterized in that** the ripening temperature is 17-19°C.

10. Method according to claim 9, **characterized in that** the ripening temperature is 19°C.

11. Method according to one or more of claims 1-10, **characterized in that** goat milk is used which is pasteurized using a pasteurization temperature up to about 90°C.

12. Method according to claim 11, **characterized in that** the pasteurization is carried out at a temperature of 85-90°C for 5-60 sec.

13. Method according to claims 11-12, **characterized in that** the pasteurization is carried out at a temperature of 90°C for 15 sec.

14. Method for making goat cheese in which pasteurized goat cheese milk is mixed with a usual starter containing mesophilic bacteria and is coagulated to obtain a curd/whey mixture, the curd is cut, whey is separated off, the curd is brought to a suitable scalding temperature with washing water and is scalded, the washing water is removed and the curd is put into a desired mould and pressed, after which the moulded goat cheese is brined and left to ripen, **characterized in that** goat milk is used which is pasteurized using a pasteurization temperature up to about 90°C.

15. Method according to claim 14, **characterized in that** the pasteurization is carried out at a temperature of 85-90°C for 5-60 sec.

16. Method according to claims 14-15, **characterized in that** the pasteurization is carried out at a temperature of 90°C for 15 sec.

17. Goat cheese obtainable by use of the method according to one or more of claims 1-13, **characterized in that** at least one or more of the contents of 2-methylpropanal, 3-methylbutanal, 2-methylbutanal, 3-ethyl-2,5-dimethylpyrazine, 2,3,5-trimethyl-6-ethylpyrazine, 2,6-dimethylpyrazine, trimethylpyrazine, pyrazine and methylpyrazine are increased relative to the contents of these substances in goat cheese made in the usual way.
